Europäisches Patentamt

European Patent Office

Office européen des brevets

(11) Publication number: **0 455 866 A1**

## EUROPEAN PATENT APPLICATION

(21) Application number: 90122147.3

(22) Date of filing: 20.11.90

(51) Int. Cl.5: **C04B 41/63**, C04B 41/64, C04B 14/40

(30) Priority: 11.05.90 AU 54963/90

(43) Date of publication of application:
13.11.91 Bulletin 91/46

(84) Designated Contracting States:
AT BE CH DE DK ES FR GB GR IT LI LU NL SE

(71) Applicant: PABCO PRODUCTS PTY LIMITED
16 Davis Road, Wetherill Park
New South Wales, 2164(AU)

(72) Inventor: O'Brien, Philip
5 St. Georges Crescent, Sandy Point
New South Wales 2170(AU)
Inventor: McDonald, John G.
39 Raglan Street, Mosman
New South Wales 1088(AU)

(74) Representative: von Kreisler, Alek,
Dipl.-Chem. et al
Patentanwälte Von Kreisler-Selting-Werner,
Deichmannhaus am Hauptbahnhof
W-5000 Köln 1(DE)

(54) Encapsulating process and agent.

(57) A process of encapsulating non-oil contaminated friable material on a substrate comprising:

contacting said material with an effective amount of an encapsulating agent which substantially penetrates said friable material through to said substrate and hardens after said penetrating thereby encapsulating said material and binding said material to said substrate;

wherein said encapsulating agent comprises a polymerizable or hardenable agent together with a penetrating enhancing solvent;

said encapsulating agent comprising from about 25 wt% to about 99.5 wt% of said polymerizable or hardenable agent and from 75% by weight to 0.5% by weight of said solvent.

Technical Field

The present invention relates to a process of encapsulating non oil contaminated friable material on a substrate and an encapsulating agent for encapsulating non oil contaminated friable material on a substrate. In one specific form the invention relates to a process of encapsulating and binding together the loosely held asbestos fibres on the surface of a cementitious substrate.

Background Art

Present treatments of loosely held asbestos fibres on substrates only coat outer asbestos fibres rather than penetrate the full thickness of the soft outer asbestos layer and into the solid sub-layer of an asbestos cement sheet. The consequence of which is that whether the sheet is primed or just merely coated, the outer layer, which consists of degraded crystallised carbonated cement along with loose asbestos fibres, lichen and dirt allows the coating to peel off, exposing asbestos fibres.

The mechanism of this is that the soft asbestos layer splits (fails cohesively) and the coating, no matter how well affixed to the outer surface, is released from the main body of the sheet along with loose asbestos fibres. If the sheet is cleaned prior to coating, adhesion is somewhat enhanced, however, significant quantities of asbestos fibre are released into the environment by currently available cleaning techniques.

Due to the potential health hazard of loose asbestos components and the strict government guidelines which now operate with regard to the use of asbestos in the environment it is obviously of great importance to find methods of increasing the safety of products which contain these, and other potentially harmful fibres.

Objects of Invention

It is an object of the present invention to provide a process of encapsulating non oil contaminated friable material on a substrate.

Another object is to provide an encapsulating agent for encapsulating non oil contaminated friable material on a substrate.

Disclosure of Invention

The present invention derives from the entirely unexpected finding that an effective amount of an encapsulating agent, when applied to a friable material loosely held on a suitable substrate, according to the method of the invention, is capable of penetrating into the soft outer layer of the substrate and keying into its undeteriorated solid sub-layer. As the application continues, the soft outer layer becomes saturated with the encapsulating agent, which as it hardens, encapsulates the fibres and locks them into place while providing solid adhesion to the sub-layer. The encapsulating agent may be applied in one coat, or two, three or more coats, directly over a suitable material, such as an aged cement asbestos sheet, and no cleaning is required.

The essence of the encapsulating process of the present invention lies in the fact that it penetrates all the way through the thick soft layer of a friable material, such as the mat of asbestos fibres, dirt, carbonated cement, lichen etc. on the outside of an aged asbestos cement sheet, binding individual loose fibres, locking the surface and sub-surface fibres together and adhering the outer layer to the sheet. This is significantly different to conventional priming or painting processes which merely mask the surface fibres. Conventional primers are not designed to soak through, which leaves the potential for fibre release. Even those products which are capable of soaking through to the sub-layer are not designed to fill the soft outer layer to capacity (saturate), they therefore can not encapsulate the fibres completely.

Thus according to a first embodiment of the invention there is provided a process of encapsulating non oil contaminated friable material on a substrate comprising:

contacting said material with an effective amount of an encapsulating agent which substantially penetrates said friable material through to said substrate and hardens after said penetrating thereby encapsulating said material and binding said material to said substrate.

According to a second embodiment of this invention there is provided an encapsulating agent for encapsulating non oil contaminated friable material on a substrate comprising

a polymerisable or hardenable agent together with a penetrating enhancing solvent.

Typically the encapsulating agent includes a surface crust forming substance, a zinc or copper compound or complex and a fungicide.

Typically the friable material on a substrate is loosely held fibres attached to a solid cement/asbestos matrix, lichen -living and dead, and dirt etc.

In practice, the invention is particularly useful in the treatment of aged asbestos cement roofing panels. The treatment effectively hardens the panels, increases their strength, and reduces the risk of fibre release from the panel. It is also proposed that the process may be used on old asbestos cement panels prior to their removal to make the removal process safer.

The encapsulating agents according to the invention are comprised of a polymerisable or hardenable component, generally together with a suitable solvent, specifically blended to enhance penetration characteristics. In instances where the polymerisable or hardenable component has high penetration it will not be necessary to include a solvent.

In general, the encapsulating agents will comprise from about 25% to about 100% polymerisable or hardenable component, with the remainder made up of a suitable solvent. Preferred agents will comprise about 66.5% polymerisable or hardenable component to 33.5% solvent.

Suitable solvents include aromatic solvents or mixtures thereof, for example xylol or toluol, optionally in the presence of a ketone solvent such as acetone, methyl ethyl ketone (MEK), or methyl isobutyl ketone. A preferred solvent comprises 90 to 0% MEK and 10% to 100% xylol, and more preferably 50% MEK to 50% xylol.

Generally encapsulating agents according to the invention consist of a blend of reactive resin or polymer components, which upon the evaporation of the transferring solvent react and harden, wetting the asbestos fibres gypsum/silicious particles, lichen, dirt etc. binding them together. These resins or polymers may also be reacted with calcium, magnesium or asbestos on the substrate to form new composites.

The polymerisable or hardenable component thus typically comprises an effective amount of at least one resin together with a hardener. Suitable resins for use in the invention include, but are not limited to those selected from the following groups: epoxy, polyurethane, polyester, acrylic or $C_9$ to $C_{12}$ aromatic/aliphatic hydrocarbon resins, such as those based on styrene, coumarone-indenes, silicones, or combinations thereof.

The total resin content typically varies between about 50 to 80% by weight resin to 50 to 20% by weight hardener. Preferred resins are epoxy resins in the range of 30% to 75% of polymerisable or hardenable component.

An effective amount of an appropriate catalytic or coreactive hardener is generally present. For example polyamide hardener, preferably in the range of 25% to 70% of polymerisable or hardenable component.
Alternative hardeners which may be employed include, primary amines, polymeric thiols, boron trifluoride, ketimines, tertiary amines, imidazoles, polyaminoamides, polyisocyanates or polyphenols.

Alternatively the polymerisable or hardenable component comprises an effective amount of at least one polymer together with an appropriate initiator. Suitable polymers for use in the invention include those derived from acrylate esters (e.g. methyl, ethyl, or butyl acrylate), vinyl esters (e.g. vinylacetate), vinyl-nitriles (e.g. acrylonitrile), aromatic vinyl compounds (e.g. styrene ), acrylic acid, methacrylic acid, maleic anhydride, acrylonitrile, and so on, or combinations thereof.

Typical initiators include hydroperoxide polymerisation initiators such as cumene hydroperoxide preferably present in the range of 0.05 to 5 parts by weight of the monomer.

In addition a polymerisation accelerator such as a sulfinate (e.g. methyl p-toluenesulfinate), may be added.

Also encompassed by the present invention are UV photocurable monomers which form polymers such as, for example, polyacrylates, together with appropriate photoinitiators, such as alkyl esters of benzoin, or benzophenone.

The encapsulating agent may further comprise a pigment in the range of 0 to 20% such as an organic pigment for example, phthalocyanines or dioxazine derivatives, inorganic pigments such as kaolin, diatomaceous earth, mica and ceramic microspheres of silicon dioxide.

In addition the encapsulating agent may also contain coupling components such as silane monomers, wetting agents for example silicone surfactants or coreactive components such as, thiuram sulphides or thiazo sulphides, together with conventional stabilisers, diluents, adjuvants, fungicides such as Acticide EP (manufactured by Thor Chemicals), algicides such as zinc oxide and thixotropic aids such as aerated silica or synthetic clays.

The surface crust forming substance is a deposit formed on the surface of the material and generally consists of a mixture of pigment, lichen retarder, fungicide, thixotropic aid and hardened polymer.

The % weight ranges of components of an encapsulating agent of the invention are as follows:

## Encapsulating Composition

| | |
|---|---|
| Polymerisable component | 25 - 95wt% |
| Solvent | 0 - 75wt% |
| Pigment, Surface film former | 0 - 15wt% |
| Lichen retarder | 0 - 20wt% |
| Fungicide | 0 - 10wt% |
| Thixotropic aid | 0 - 10wt% |
| Hardener for polymerisable component | 0.1 - 40wt% |

Desirably an encapsulating agent is applied at low pressure, generally at pressure rates of less than about 1,000 psi, by means which provide maximum penetration of the encapsulating agents for a given pressure range. In the practice of the invention airless spray equipment is advantageously utilised. On application the encapsulating agent is allowed to saturate and/or flood the surface until the encapsulating agent is seen to run freely across the surface indicating saturation. Multiple coats are applied until an opaque crust is formed on the surface indicating total saturation. Typically this is achieved by application of about 0.5 liters per square metre of the encapsulating agent. An alternative technology applies a thixotropic paste in one pass for a wet film build of about 500 microns. The paste is also used to effect repair of cracked and broken sheets using the addition of 300gm weight of chopped strands of fiberglass or polyester fabric. This procedure holds all loose fibres in place drawing the soft flexible asbestos fibres down flat on the cement sheet surface. Thus all of the loose fibres of the soft outer layer are locked together and firmly bonded to the solid sub-layer. Locking the sheet together substantially reduces the future possibility of fibre release.

After the encapsulation process, the system may optionally be encased with suitable agents including cementitious coatings, conventional acrylics, polyurethanes such as polyurethane foam, bituminous aluminium composites, and most commercially available surface coatings such as those disclosed in Kirk-Othmer, Encyclopedia of Chemical Technology, Third Edition, Volume 6:427, which are incorporated herein by reference.

The new treatment thus takes a completely different approach to the conventional cleaning/priming preparation system. The application procedure differs from all other techniques reviewed, in that:-

(a) no pre cleaning is required.

All conventional systems in use require some cleaning procedure. High pressure washing as nominated in certain prior art processes, liberates a considerable amount of free asbestos fibres. Hence, this technique is not allowed in the Australian National Asbestos Code of Practice Guidelines. To date, all applications have nominated cleaning as previously mentioned and have utilised either the water jet principle, mechanical abrasion, or fungicides combined with cleaning, prior to painting and/or priming and painting.

(b) Brushing or rolling techniques are not used, to avoid disturbing the asbestos fibres.

An additional benefit of the encapsulating process of the invention is that it increases the strength of the sheet by as much as 30% depending on the deterioration factor and increased strengths above this are predicted.

Beyond all of the technical advantages however, perhaps the most significant single improvement that the encapsulating process offers is the fact that the product no longer requires extensive cleaning thus making this process far safer than conventional methods.

## Brief Description of Drawing

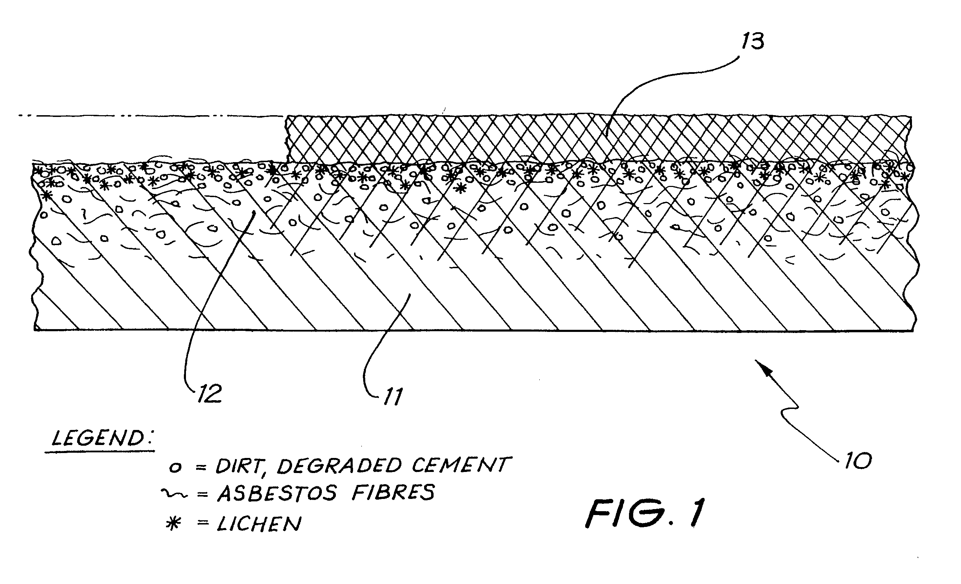

Fig. 1 depicts schematically a non oil contaminated asbestos sheet which has been treated with an encapsulating agent of the invention.

## Best Mode And Other Modes For Carrying Out The Invention

Effective amounts of the following formulation are added together and homogenously mixed by a mechanical mixer;

Encapsulating Agent A

**(a)  Hardenable component**

**Content 52%**
**(% by weight)**

60%  epoxy resin
39.9% polyamide hardener
0.1% organic pigment

**(b)  Solvent**

**Content 48%**
**(% by weight)**

50% M.E.K./50% Xylol

Encapsulating Agent B

| | | | |
|---|---|---|---|
| (a) | Epoxy resin | 38.45wt% | |
| | Xylol | 44.6wt% | |
| | Polychloro pthalocyanine | 0.29wt% | |
| | Zinc oxide | 5.08wt% | |
| | Acticide EP | 0.9wt% | |
| | Kaolin | 10.68wt% | |
| (b) | Polyamide hardener | 100wt% | |

Four parts of (a) are mixed with one part of (b) prior to use.

Composition A or B is then applied to an asbestos cement panel, as a single or multiple coats, by means of airless spray equipment at a pressure of less than 1,000psi. Application is continued until the encapsulating agent is seen to flood the surface of the panel, and the material is then allowed to harden. After hardening the surface is stabilised against asbestos fibre loss. It may then be covered with an effective amount of an appropriate coating to provide surface protection against weathering and mechanical damage.

Fig. 1 depicts schematically a non oil contaminated asbestos sheet 10 which consists of a solid matrix portion 11 and a softened, weathered and upper degraded portion 12 (which typically contains lichens and dirt as well as loose asbestos fibres and degraded cement) which has been treated with an encapsulating agent of the invention. After application the encapsulating agent penetrates layer 12 and partially into layer 11 before hardening. On hardening a surface crust 13 is formed over the top of layer 12.

Encapsulating Agent C

|     |                               |           |
| --- | ----------------------------- | --------- |
| (a) | Epoxy resin                   | 54.97wt%  |
|     | Xylol                         | 26.2wt%   |
|     | Polychloro pthalocyanine      | 0.38wt%   |
|     | Zinc oxide                    | 6.94wt%   |
|     | Acticide EP                   | 1.26wt%   |
|     | Kaolin                        | 7.53wt%   |
|     | Aerated silica (Aerosil 200)  | 2.72wt%   |
| (b) | Polyamide hardener            | 40.77wt%  |
|     | Xylol                         | 46.78wt%  |
|     | Clay                          | 9.26wt%   |
|     | Aerated silica (Aerosil 200)  | 3.19wt%   |

One part of (a) is mixed with one part of (b) prior to use.

Composition C (a paste) is applied to an asbestos cement panel, as a single coat, by means of airless spray equipment at a pressure of less than 1,000psi at an application rate of 0.5 liters per square metre (500 microns wet). The material is then allowed to harden. After hardening the surface is stabilised against asbestos fibre loss. It may then be covered with an effective amount of an appropriate coating to provide surface protection against weathering and mechanical damage.

Industrial Applicability

The process of the invention is widely applicable to the containment of asbestos fibres in and on panels used in the building and construction industry, and the like. The surface of an asbestos cement sheet, once it has been treated in accordance with the process of the invention can safely be coated to offer long term prevention of the release of asbestos fibres into the atmosphere. The treated surface will not peel or delaminate, and, providing the system is given ongoing maintenance in full accordance with the manufacturers specific recommendations, the treated surface will remain sealed from fibre release until the sheet is physically disturbed.

It is conceivable that the process of the invention could be useful in the treatment of friable surfaces and in the hardening of the outer layers of soft porous materials.

**Claims**

1. A process of encapsulating non-oil contaminated friable material on a substrate comprising:

    contacting said material with an effective amount of an encapsulating agent which substantially penetrates said friable material through to said substrate and hardens after said penetrating thereby encapsulating said material and binding said material to said substrate;

    wherein said encapsulating agent comprises a polymerizable or hardenable agent together with a penetrating enhancing solvent;

    said encapsulating agent comprising from about 25 wt% to about 99.5 wt% of said polymerizable or hardenable agent and from 75% by weight to 0.5% by weight of said solvent.

2. The process of claim 1 wherein said solvent comprises an aromatic solvent selected from the group consisting of xylol and toluol.

3. The process of claim 2 wherein said solvent comprises 90 to 0.5 wt% methyl ethyl ketone and 10% to 99.5% xylol.

4. The process of claim 1 wherein said polymerizable or hardenable agent comprises at least one resin selected from the group consisting of epoxy, polyurethane, polyester, acrylic and $C_9$ to $C_{12}$ aromatic/aliphatic hydrocarbon resins based on styrene, coumarone-indenes, silicones and combinations thereof together with a hardener.

5.  The process of claim 4 comprising a catalytic or coreactive hardener which is selected from at least one of the groups consisting of primary amines, polymeric thiols, boron trifluoride, ketimines, tertiary amines, imidazoles, polyamine amides, polyisocyanates, and polyphenols and said polymerizable or hardenable agent is polymerizable by or hardenable by said polymerizable or hardenable component.

6.  The process of claim 5 comprising an initiator or monitor selected from at least one of the groups consisting of acrylate esters, vinyl esters, vinyl nitriles, aromatic vinyl compounds, acrylic acids, methacrylic acids, maleic anhydride, and acrylonitriles.

7.  The process of claim 6 wherein said initiator is cumene hydroperoxide present in an amount in the range of .05 to 5 parts by weight of the polymerizable monomer.

8.  The process of claim 7 further comprising a surface crust forming agent and a UV photocurable monomer.

9.  The process of claim 8 wherein an encapsulating agent further comprising a coupling component, a wetting agent and a fungicide.

10. The process of claim 2 wherein the encapsulating agent comprises

## Encapsulating Composition

| | |
|---|---|
| Polymerizable component | 25 - 99.8 wt% |
| Solvent | 0.1 - 75 wt% |
| Pigment, Surface film former | 0 - 15 wt% |
| Lichen retarder | 0 - 20 wt% |
| Fungicide | 0 - 10 wt% |
| Thixotropic aid | 0 - 10 wt% |
| Hardener for polymerizable component | 0 1 - 40 wt%. |

11. The process of claim 2 comprising applying the encapsulating agent at pressure rates of less than about 1,000 psi.

12. The process of claim 2 comprising applying multiple coats of the encapsulating agent at pressure rates of less than about 1,000 psi until an opaque crust is formed on the surface indicating total saturation.

13. The process of claim 2 wherein the encapsulating agent comprises

(a)  Hardenable component

Component 52%                  60% epoxy resin

(% by weight)              39.9% polyamide hardener

0.1% organic pigment

(b)  Solvent

Content 48%               50% M.E.K./50% xylol

(% by weight)

14. The process of claim 2 wherein the encapsulating agent comprises

| (a) | Epoxy resin | 38.45 wt% |
| | Xylol | 44.6 wt% |
| | Polychloro pthalocyanine | 0.29 wt% |
| | Zinc oxide | 5.08 wt% |
| | Acticide EP | 0.9 wt% |
| | Kaolin | 10.68 wt% |
| (b) | Polyamide hardener | 100 wt% |

wherein prior to use four parts of (a) are mixed with one part of (b).

LEGEND:

o = DIRT, DEGRADED CEMENT
~ = ASBESTOS FIBRES
* = LICHEN

FIG. 1

EP 0 455 866 A1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | FR-A-1 537 007 (CENTRE DE RECHERCHES DE PONT-A-MOUSSON)<br>* the whole document *<br>— — — | 1-2,4-5 | C 04 B 41/63<br>C 04 B 41/64<br>C 04 B 14/40 |
| X | FR-A-1 400 473 (SOCIETE DE PRODUITS CHIMIQUES & CO)<br>* the whole document *<br>— — — | 1-2,4-5 | |
| A | DE-A-1 471 458 (SCHERING AG)<br>* the whole document *<br>— — — | 1-2,4-5 | |
| A | EP-A-0 330 499 (HITACHI CHEMICAL CO LTD)<br>* the whole document *<br>— — — — — | 1 | |

| | | | TECHNICAL FIELDS SEARCHED (Int. Cl.5) |
|---|---|---|---|
| | | | C 04 B |

The present search report has been drawn up for all claims

| Place of search | Date of completion of search | Examiner |
|---|---|---|
| Berlin | 20 August 91 | KUEHNE H C |

CATEGORY OF CITED DOCUMENTS

X : particularly relevant if taken alone
Y : particularly relevant if combined with another
  document of the same catagory
A : technological background
O : non-written disclosure
P : intermediate document
T : theory or principle underlying the invention

E : earlier patent document, but published on, or after
  the filing date
D : document cited in the application
L : document cited for other reasons

&: member of the same patent family, corresponding
  document